# EUROPEAN PATENT APPLICATION

(11) **EP 0 670 113 A1**
(43) Date of publication of application: **06.09.1995**
(21) Application number: 94102730.2
(22) Date of filing: 23.02.1994
(51) Int. Cl.: A01N 25/04

(54) **Low ecotoxic formulations of pesticides**

(71) Applicant: MAKHTESHIM CHEMICAL WORKS LIMITED, 84100 Beer Sheva (IL)
(72) Inventor: Lubetzky, David, Lehavim (IL); Frances, Maurice, Ramot, Beer-Sheva (IL)
(74) Representative: Josif, Albert, Dr.-Ing.

(57) **Abstract**

There is provided an EW pesticidal formulation comprising:
(a) at least one pesticide having melting point of 100°C or less;
(b) a plasticizer selected from the group consisting of rosin or rosin derivatives insoluble in water;
(c) at least one surfacant; and
(d) water to make up to one liter, but not less than 200 g/l;
and optionally containing a polar solvent completely or partially soluble in water. This affords formulations which have low irritations and surprisingly improved biological activity to target species.

## Description

### BACKGROUND OF THE INVENTION

The present invention relates to specific types of pesticidal formulations which are emulsions in water (hereinafter referred to as EW formulations). The present invention particularly relates to EW pesticidal formulations containing specific types of plasticizers such as rosin and rosin derivatives, their preparation and their application to pesticides having low or medium melting points.

Solid pesticides having a low or medium melting point are generally commercialized as emulsifiable concentrate solutions. However, such formulations require considerable quantities of organic solvents and other ingredients, creating toxicological and ecotoxicological problems. Thus, the United States Environmental Protection Agency has recently begun a review of the ingredients of pesticidal formulations other than the active ingredient. In Europe, the EEC Council is in an advanced stage of legislating into law volatile organic compounds (VOC) and to require the eco-labeling of formulations which contain such VOC's. Indeed, Canada and Germany already have a system of ecotoxic labelling.

Rosin and its derivatives have been known since ancient times and they have found safe uses for a wide variety of products, including food and cosmetics. Uses in agriculture are also known as follows:

Great Britain patent no. 1,044,663 describes the use of a rosin or its derivatives in organophosphorous insecticidal compositions, but said compositions require the use of organic solvents.

Great Britain patent number 1,382,894 describes the use of rosin or its derivatives in carbamic ester compositions, but said compositions also require the use of organic solvents. The same can be said for the compositions described in Great Britain patent number 1,051,360 (Chemical Abstracts, 66: 54559v) and Soviet Union patent number 733,596 (Chemical Abstracts, 93: 127147d).

Rosin or its derivatives have been reported to be a tackifier agent in pesticidal formulations, such as in Great Britain patent number 1,398,227; United States patent number 4,211,566; and Soviet Union patent number 1,187,773 (Chemical Abstracts, 104: 10445a). In addition, rosin or its derivatives have also been reported in pesticidal powder formulations. Examples are: Japan Patent Kokai Publication number 76/19,132 (Chemical Abstracts, 84: 175194c);
Japan Patent Kokai Publication number 63/250,308 (Chemical Abstracts, 111: 92336a); and Chinese patent publication number 1,031,467 (Chemical Abstracts, 113: 19497r).

Rosin derivatives have been reported to improve the fungal resistance of polymers in Chemical Abstracts, 86: 156376p.

European patent publication numbers 432,061 and 432,062 recently disclosed aqueous emulsions of a large variety of agrochemicals. However, said compositions did not require the use of rosin and still required the use of undesirable organic solvents.

United States Patent Number 2,291,205 describes a formulation of a liquid pesticide (pine oil) using a metal salt of rosin for a liquid active ingredient and not a solid one. What works well for a liquid pesticide may not necessarily work for a solid pesticide in an EW formulation.

United States Patent Number 2,490,925 describes a formulation where the rosin or rosin derivative is the active pesticide. In the present invention the rosin is used as a plasticizer. Thus, US 2,490,925 is not relevant to the present invention.

United States Patent Number 4,957,533 describes the use of-among a large number of compounds - rosin derivatives as solvents to formulations of a special group of compounds. But this patent does not exemplify a single case where rosin derivatives are used.

### SUMMARY OF THE INVENTION

In accordance with the present invention there is provided an EW pesticidal formulation comprising:
(a) 45 g/l to 675 g/l of at least one pesticide having melting point of 100°C or less;
(b) 5 g/l to 525 g/l of at least one plasticizer selected from the group consisting of rosin or rosin derivatives insoluble in water;
(c) 40 g/l to 200 g/l of at least one surfactant; and
(d) water to make up to one liter, but not less than 200 g/l.

The present invention optionally contains at least one polar solvent completely or partially soluble in water in the concentration of up to 200g/l.

### DETAILED DESCRIPTION OF THE INVENTION

Suitable pesticides useful in the present invention can be selected for example from the following classes of pesticidal active substances:
acetanilides
benzoates
benzofurans
chlorinated hydrocarbons
hydroxybenzonitriles
imidazoles
nitroanilines
nitroxylenes
organophosphorous compounds
oxidiazoles
phenoxy-phenoxy-alkane-carboxylic acid derivatives
pyrethroids and
triazoles
Suitable acetanilides are in particular compounds of the type described in United States patent numbers 3,442,945 and 3,547,620, especially 2-chloro-2'6'-diethyl-N-(methoxymethyl)-acetanilide (alachlor). Suitable benzoates are in particular compounds of the type described in Great Britain patent number 1,247,817 especially 3-chloro- -ethoxyimino-2,6-dimethyloxybenzyl benzoate (benzoximate). Suitable benzofurans are in particular compounds of the type described in Great Britain patent number 1,271,659, especially ±-2-ethoxy-2,3-dihydro-3,3-dimethyl-5-benzofuranyl methane sulfonate (ethofumesate). Suitable chlorinated hydrocarbons are in particular compounds of the type described in United States patent number 2,799,685, especially 6,7,8,9,10,10-hexachloro-1,5,5a,6,9,9a-hexahydro-6,9-methano-2,4,3-benzo-diorathiepin-3- oxide (endosulfan). Suitable hydroxybenzonitriles are in particular compounds of the type described in United States patent numbers 3,397,054 and 4,332,613, especially the esters of 3,5-dibromo-4-hydroxyphenyl cyanide (bromoxynil) and 3,5-diiodo-4-hydroxyphenyl cyanide (ioxynil). Suitable imidazoles are in particular compounds of the type described in Great Britain patent number 1,469,772, especially N-propyl-N-[2-(2,4,6-trichlorophenoxy)-ethyl]-1H-imidazole-1-carboxamide; also compounds described in United States patent number 3,658,813, especially 1-[2-(2,4-dichlorophenyl)-2-(2-propenyloxy)-ethyl]-1H-imidazole (imazalil). Suitable nitroanilines are in particular compounds of the type described in United States patent number 3,257,190, especially N-butyl-N-ethyl-2,6-dinitro-4-trifluoromethyl-aniline (benfluralin) or 2,6-dinitro-N,N-dipropyl-4-trifluoro-methyl aniline (trifluralin). Suitable nitroxylenes are in particular compounds of the type described in United States patent number 3,385,862, especially N-(1-ethylpropyl)-2,6-dinitro-3,4-xylidine (pendimethalin). Suitable organophosphorous compounds are in particular compounds of the type described in United States patent number 3,244,586, especially O,O-diethyl-O-(3,5,6-trichloro-2-pyridinyl)-phosphorothioate (chloropyrifos ethyl) and O,O-dimethyl-O-(3,5,6-trichloro-2-pyridyl)-phosphorothioate (chloropyrifos methyl); also the compounds described in Great Britain patent number 974,138, especially 1,3-dithiolan -2-ylidene-phosphorimidate (phospholan); also the compounds described in United States patents numbers 3,230,230 and 3,240,668, especially S-[{5-methoxy-2-oxo-1,3,4-thiadiazol-3-(2H)-yl}-methyl]-O,O-dimethylphosphoro-dithioate (methidathion); also the compounds described in United States patent number 3,205,253, especially O,O-diiso-propyl-S-2-phenyl-sulphonyl-aminoethyl-phosphoro-dithioate (bensulide); also the compounds described in United States patent number 2,978,479, especially ethyl-3-methyl-4-(methylthio)-phenyl-isopropyl-phosphoramodate (fenamiphos). Suitable oxidiazoles are in particular compounds of the type described in United States patent number 3,385,862 especially 3-[2,4-dichloro-5-(1-methyl-ethoxy)-phenyl]-5-(1,1-dimethyl-ethyl)-1,3,4-oxadiazole-2-(3H)-one (oxadiazon). Suitable phenoxy-phenoxy-alkane-carboxylic acid derivatives are in particular compounds of the type described in West German patent number 2,136,828 and 2,223,804, especially methyl-2-[4-(2,4-dichlorophenoxy)-phenoxy]-propanoate (diclofop methyl). Suitable pyrethroids are in particular compounds of the type described in Great Britain patent number 1,413,491 especially (3-phenoxy-phenyl)-methyl-3-(2,2-dichloroethenyl)-2,2-dimethyl-cyclopropane-carboxylate (permethrin) and cyano-(3-phenoxy-phenyl)-methyl-3-(2,2-dichloroethenyl)-2,2-dimethyl-cyclopropane-carboxylate (cypermethrin); also 2-methyl-biphenyl-3-yl-methyl-(Z)-(IRS)-cis-3-(2-chloro-3,3,3-trifluoro-prop-1-enyl) - 2,2-dimethyl-cyclopropane-carboxylate (bifenthrin); also the compounds described in United States patent number 4,062,698, especially cyano-(3-phenoxy-phenyl)-methyl-(RS)-2-(4-chloro-phenyl)-3-methyl butyrate (fenvalerate). Suitable triazoles are in particular compounds of the type described in Israel patent number 73,450, especially 2-(4-chlorophenyl)-2-(1H)-(1,2,4-triazole-1-yl-methyl) hexanitrile (myclobutanil); also the compounds described in Great Britain patent number 1,522,657, especially 1-[2-(2,4-dichlorophenyl)-4-propyl-1,3-dioxolan-2-yl-]-methyl-1H-1,2,4-triazole (propiconazole).

The plasticizers useful in the present invention are rosin and rosin derivatives insoluble in water. By rosin derivatives insoluble in water there are included hydrogenated rosin, polymerized rosin, methyl esters of rosin or of hydrogenated rosin, glycerol esters of rosin or hydrogenated rosin, triethylene glycol esters of rosin or hydrogenated rosin and pentaerythratol esters of rosin or hydrogenated rosin. Most preferred are rosin, the methyl ester of rosin and the triethylene glycol ester of rosin.

In order that formulations of the present invention retain their ecological acceptability, it is preferable to use a surfactant in which the lipophillic part is safe natural product. Such surfactants are usually found in use in the food and cosmetic industries.

The non-ionic surfactants of the present invention are those with an H.L.B. range of from 7 to 17, preferably from 10 to 15. Examples of such surfactants are alkoxylated triglycerides, the alkoxylated di- or tri-styryl-phenols, the alkoxylated alkyl phenols, the alkoxylated alcohols, the alkoxylated fatty alcohols, and alkoxylated sorbitol fatty esters. Preferred surfactants are alkoxylated triglycerides such as ethoxylated castor oil, ethoxylated propoxylated castor oil, and alkoxylated sorbitan fatty esters; and most preferred are ethoxylated castor oil and ethoxylated propoxylated castor oil.

Among the anionic surfactants of the present invention are the acid or neutralized forms of the phosphate esters of alkoxylated di- or tri-styrylphenols, the sulphate, sulphonate, or phosphate esters of alkoxylated alkylphenols, the sulphate or phosphate esters of alkoxylated fatty alcohols, or metal salts of alkyl benzene sufonic acids.

The polar solvents optionally contained in the formulations of the present invention should have a flash point of over 23°C and a solubility in water of more than 5%. Examples of the polar solvents optionally contained in the formulations of the present inventions are alcohols, glycols, polyglycols, glycol ethers, ketones and high solvent power polaric solvents such as γ-butyrolactone, N-methyl pyrolidone and the like. The concentration of such solvents in the present formulation should not be greater that the concentration of water.

The novel formulations of the present invention may also contain:
- an antifreeze;
- an antifoam, such as polysyloxanes;
- an emulsion stabilizer;
- auxiliary additives.

As conventional antifreeze agents can be mentioned agents such as propylene glycol, glycerol, diethylene glycol, triethylene glycol, urea, or ethylene glycol.

Examples of emulsion stabilizers are fumed and precipitated silica and alumino-silicates, bentonites and other swelling clays.

Organic compounds such as polysachrides of the xantam gum type, the alginates, the carboxylated or hydroxylated methyl-celluloses, the synthetic macro-molecules of the polyvinyl-prolidone, polyethylene glycol, polyvinylic alcohol type, may also be used as emulsion stabilizers.

Auxiliary additives that may be used are oxidation and u.v. protectants, pH buffers, bactericides and A.I. stabilizers.

The concentrated EW formulations which are the object of the present invention, may be prepared as follows:
Mixing one or more molten pesticidal active ingredients with one or more of the plasticizers, adding one or more of the surfactants to the mixture and preparation of the emulsion following one of the standard methods of procedure. To this end one may use an apparatus such as high-sheer mixers, high pressure pumps, vibrators, orifice homogenizers and the like.

These concentrated water emulsions of the present invention are stable physically and chemically in a temperature range from -14°C to 54°C, where no crystallization phenomena are observed during storage. They are also stable when diluted in water. These emulsions may also be used undiluted as ulv formulations or with low dilution (L.V. formulations).

The present invention is also of particular note, because the formulations related to it have a low degree of phytotoxicity compared to the commercial E.C. equivalents. They may also partially replace powder formulations, avoiding in this way all the dust problems vis-a-vis the user.

The EW formulations of the present invention have the further advantages of being non-flammable and of being of low dermal toxicity and low skin irritation.

Finally, the EW formulations of the present invention can be considered ecotoxicologically safe, since they are prepared with safe inert ingredients. The result is not only useful formulations, but also formulations which can stand up to the stringent requirements of the EPA in the United States and the stiff European control of volatile organic compounds.

While the invention will now be described in connection with certain preferred embodiments in the following examples, it will be understood that it is not intended to limit the invention to these particular embodiments. On the contrary, it is intended to cover all alternatives, modifications and equivalents as may be included with the scope of the invention as defined by the appended claims. Thus, the following examples, which include preferred embodiments, will serve to illustrate the practice of this invention, it being understood that the particulars shown are by way of example and for purposes of illustrative discussion of preferred embodiments of the present invention only and are presented in the cause of providing what is believed to be the most useful and readily understood description of procedures as well as of the principles and conceptual aspects of the invention.

### EXAMPLE 1

To 210 g of molten endosulfan were added 190 g of Abalyn E (methyl ester of rosin ex Hercules) 100 gr of Soprophor 14-R (ethoxylated castor oil 60 EO ex R.P and 10 g of Epoxol 7-4 (epoxilated soybean oil - Swift). The mixture was then mixed until homogeneous. To 475 g of deionized water was added 5 g of Aeroril COK 84 (fumed silicon ex Degussa). A suspension was prepared in a homogenizer Ultron Turox 45 T. An emulsion was prepared afterwards adding progressively the aqueous suspension of Aerosil COK 84 into the organic mixture.
1 g of antifoam Silicon AF120 (ex AIDCHIM) is added during the operation. This operation lasts approximately 15 minutes with progressive increase of the agitation rate up to a maximum of 10.000 rpm. This emulsion had the following characteristics:
- It is stable in a range of temperatures from -14°C to 54°C.
- It showed no crystallization with time.
- It remained stable when diluted in a rate of 5/100 (v/v) in CIPAC standard water D (no separated material or creamy settling is observed.).

### EXAMPLE 2

The procedure of Example 1 was repeated, using ethyl chloropyrifos as active ingredient, as follows: 255 g of molten chloropyrifos ethyl, 255 g of Hydrogal M (ethyl ester of hydrogenated rosins, ex. D.R.T), 100 g of Soprophor 14-R, 1.2 g of Epoxol 7-4, 1 g of Silicaid AF 100, 5 g of Aerosil COK 84 suspended in deionized water to make up 1 liter. This emulsion had the following characteristics:
- It is stable in a range of temperatures from -14°C to +54°C.
- No crystallization with time.
- Stable when diluted at 5% v/v in CIPAC standard water D.

### EXAMPLE 3

To 110 g of molten cypermethrine, was added 160 g of Abalyn E(methyl ester of rosin ex Hercules), 50 g of Berol 917 (ethoxylated castor oil 20 EO ex Berol) and 50 g of Berol 199 (ethoxylated castor oil 32 EO ex Berol). It was mixed until a homogeneous liquid was obtained.

A 2% aqueous suspension of Aerosil COK 84 was prepared. Some 131.5 g of the aqueous suspension was added into a planetary mixer. The organic concentrate (A.I. + plasticizer + emulsifiers) was gradually added to the aqueous suspensions while mixing.

This operation lasts approximately 20 min. To this mixture were added 96 g of deionized water and mixing was continued for 10 minutes. This preparation was agitated with an Ultra Turax 45T homogenizer for approximately 1 minute at an agitation rate of maximum, 10,000rpm. About 1 g of Silicaid AF 100 was added while agitating.
Finally 422.5 g of water were added to the emulsion with gentle mixing. The concentration of cypermethrine in this emulsion is 100 g/l. This emulsion had the following characteristics:
- Stable in a range of temperatures from-14°C to +54°C.
- No crystallization with time.
- Stable when diluted at 5% v/v in CIPAC standard water D.

### EXAMPLE 4

The procedure described in Example 1 was repeated using 280 g of molten propiconazole, 30 g of Granolite M, (methyl ester of rosin ex DRT) 150 g of Servirox OEG 68.5(ex SERVO), 1 g of Silicaid AF 100 antifoam and deionized water to make up to 1 liter of emulsion. This emulsion had the following characteristics:
- Stable in a range of temperatures from -14°C to +54°C.
- No crystallization with time.
- Stable when diluted in a ratio of 5% v/v in CIPAC standard water D.

### EXAMPLE 5

The procedure described in Example 1 was repeated using 215 g of molten alachlor, 150 g of Emulsan EL (ethoxylated castor oil 36EO ex BASF), 200 g of Abalyn E and deionized water to make up to 1 liter of emulsion. This emulsion had the following characteristics:
- Stable in a range of temperatures from-14°C to +54°C.
- No crystallization with time.
- Stable when diluted at 5% v/v in CIPAC standard water D.

### EXAMPLE 6

The procedure described in Example 1 was repeated using 205 g of molten Imazalil, 180 g of Granolite M, 100 g of Servirox OEG 68.5, 1 g of antifoam Silicaid AF 100 and deionized water to make up to 1 liter of emulsion. This emulsion had the following characteristics:
- Stable in a range of temperatures from -14°C to +54°C.
- No crystallization with time.
- Stable when diluted in a ration of 5% v/v in CIPAC standard water D.

### EXAMPLE 7

200 g of Gum Rosin Pale 2A-WW (ex SOCER) were melted in presence of 150 g of Agsol Ex 1 (ex ISP) at about 100°C. To this mixture were added 410 g of Prochloraz tech and 65 g of WITCONOL NS 500 LQ (ex WITCO). This preparation was mixed until homogeneous. An emulsion was prepared in a planetary mixer when 355 g of deionized water were added progressively into the organic mixture. The emulsion was homogenized with an Ultra Turax 45T 1 g of antifoam Silicone AF 100 was added during this operation. This emulsion had the following characteristics:
- Stable in a range of temperatures from -14°C to +45°C.
- No crystallization with time.
- Stable when diluted in a ratio of 5% v/v in CIPAC
- standard water D.

### EXAMPLE 8

The procedure of Example 1 was repeated using 215 g of molten bromoxynitl octanoate, 150 g of Soprophor 14-R, 185 g of Granolite M and deionized water to make up to 1 liter of emulsion. The characteristics of this emulsion were as for the previously described emulsions.

### EXAMPLE 9

A trial to check the relative phytotoxicity was carried out with endosulfan 20EW (Example 1) and commercial endosulfan 35 EC.

The trials were carried out with cucumbers in a greenhouse, The plants were sprayed once at 0.1% A.I. and the observation was done 6 days later. The results were as follows:

| | Level of phytotoxicity |
|---|---|
| EW | 1 |
| EC-35 | 2 |
| Untreated | 0 |

Both formulations had some phytotoxicity, but the EW formulation of the present invention was less phytotoxic than the commercial EC.

### EXAMPLE 10

The formulation of Example 2 was used to form an oil in water emulsion by mixing the appropriate amount of formulation with water to apply 50 g of chloropyrifos per 1000 m² in a spray volume of 100 liters per 1000m². The results were compared with the results of commercial chloropyrifos 48 E.C. (Aromatic solvent). The emulsions were sprayed on vineyards against polychrosis botrann. In 20 bunches were counted the number of contaminated berries. The results, expressed as average number of infected spots per bunch and number of infected berries, are shown in the following Table:

| BIOLOGICAL ACTIVITY OF VARIOUS FORMULATIONS OF CHLOROPYRIFOS AGAINST POLYCHROSIS BOTRANA IN GRAPES | | |
|---|---|---|
| | Number of Infected spots | Number of infected Berries |
| Chlorpyrifos EW | 1.00 D | 2.00 D |
| Chlorpyrifos aromatic | 1.75 B | 4.00 CD |
| Untreated | 7.25 A | 34.00 A |

### EXAMPLE 11

Following the method of Example 10, similar tests were run but against Pseudococcus s.p. in grapes. The results were as follows:

| | Number of Infected Bunches |
|---|---|
| Chlorpyrifos EW | 0.25 c |
| Chlorpyrifos aromatic | 2.00 b |
| Untreated | 17.75 |

### EXAMPLE 12

Insecticidal activity of chlorpyrifos formulations was tested at the Biological Institute on German cockroaches Blattella germanica (Dictyopera: Blattellidae) bred in the laboratory of the Ministry of Health in Jerusalem.

The pyrinex formulations tested are:
1. Regular sanitary formulation of 480 g/l a.i. EC.
2. Chlorpyrifos 250 g/l a.i. EW
3. Untreated

### Procedure:

Ceramic tiles were dipped into an 0.5% a.i. solution of the formulation tested. After the water and solvent had evaporated from the surface, 2 tiles were placed on top of each other, separated by a cardboard, inside a plastic test cubicle. The test cubicle was 16 X 33 X 38.5 cm, with 4 air-openings, a sleeve to introduce food and water, covered by a glass plate. Each exposure experiment lasted 48 hours, with 4 repetitions on 25 to 50 cockroaches. This procedure avoided forced contact between the cockroach and the formulation-coated tile.

Results showing the activity of the different formulations are given in the Table below.

**TABLE**

| BIOLOGICAL ACTIVITY OF CHLORPYRIFOS AGAINST DICTYOPTERNA BLATTELLIDAE | | | | | | | |
|---|---|---|---|---|---|---|---|
| Application | Percent Mortality of the Roaches | | | | | | |
| | Number of Days After Spraying | | | | | | |
| | 14 | 28 | 42 | 56 | 77 | 91 | 107 |
| Chlorpyrifos EW | 100 | 94.9A | 99.1A | 93.4A | 95.5A | 93.0AB | 51.4B |
| Chlorpyrifos(aromatic) | 100 | 86.3B | 57.6B | 29.4B | | | |
| Untreated | 0.9C | 1.0C | 0.0C | 0.0C | 0.0C | 0.0C | 0.0C |

## Claims

1. An EW pesticidal formulation comprising:
(a) 45 g/l to 675 g/l of at least one pesticide having melting point of 100°C or less;
(b) 5 g/l to 525 g/l of a plasticizer selected from the group consisting of rosin or rosin derivatives insoluble in water ;
(c) 40 g/l to 200 g/l of at least one surfactant; and
(d) water to make up to one liter, but not less than 200 g/l.

2. A formulation in accordance with Claim 1, wherein the pesticide is chosen from the group consisting of acetanilides, benzoates, chlorinated hydrocarbons, hydroxybenzonitriles, imidazoles, nitroanilines, nitroxylenes, organophosphorous derivatives, phenoxy-phenoxy-alkane carboxylic acids, pyrethroids and triazoles.

3. A formulation in accordance with Claims 1 or 2, wherein the pesticide is chosen from the group consisting of acetanilides, chlorinated hydrocarbons, hydroxy-benzonitriles, imidazoles, organophosphorous derivatives, pyrethroids, and triazoles.

4. A formulation in accordance with any of Claims 1 to 3, wherein the pesticide is alachlor.

5. A formulation in accordance with any of Claims 1 to 3, wherein the pesticide is endosulfan.

6. A formulation in accordance with any of Claims 1 to 3, wherein the pesticide is chosen from the group consisting of bromoxynil and ioxynil.

7. A formulation in accordance with any of Claims 1 to 3, wherein the pesticide is prochloraz.

8. A formulation in accordance with any of Claims 1 to 3 wherein the pesticide is imazalil.

9. A formulation in accordance with any of Claims 1 to 3, wherein the pesticide is chloropyrifos.

10. A formulation in accordance with any of Claims 1 to 3, wherein the pesticide is cypermethrin.

11. A formulation in accordance with any of Claims 1 to 3, wherein the pesticide is propiconazole.

12. A formulation in accordance with any of Claims 1 to 11 wherein the rosin derivatives are selected from the group consisting of rosin esters such as the methyl ester of rosin, glycerol ester of rosin, the triethylene glycol ester of rosin and the hydrogenated esters of rosin.

13. A formulation in accordance with Claims 12, wherein the rosin derivatives are the methyl ester of rosin or the triethylene glycol ester of rosin.

14. A formulation in accordance with any of Claims 1 to 13, wherein the surfactant is chosen from the group consisting of alkoxylated triglycerides, alkoxylated di- or tristyryl-phenols, alkoxylated lated alkylphenols, alkoxylated fatty amines, alkoxylated fatty alcohols, alkoxylated sorbitol fatty esters and the acid or neutralized forms of phosphate esters of alkoxylated di- or tristryrylphenols, sulphate, sulphonate or phosphate esters of alkoxylated alhylphenols, or sulphate or phosphate esters of alkoxylated fatty alcohols.

15. A formulation in accordance with any of Claims 1 to 14, wherein the surfactant is chosen from the group consisting of ethoxylated castor oil and alkoxylated butyl alcohol.

16. A formulation in accordance with any of Claims 1 to 15, wherein the surfactant is ethoxylated castor oil or ethoxylated propoxylated castor oil.

17. A formulation in accordance with any claim 1 to 16 which also contains a polar solvent selected from the group consisting of aliphatic hydrocarbons, alcohols, glycols, polyglycols, glycol ethers, ketones and high solvent power polaric solvents such as γ-butyrolactone, N-methyl pyrolidone and mixtures thereof.

18. A formulation in accordance with Claim 17 wherein the polar solvent is from the group consisting of n-methylpynolidone and γ-butyrobuton.

19. An EW pesticidal formulation comprising:
(a) 45 g/l to 675 g/l of at least one pesticide having melting point of 100°C or less;
(b) 5 g/l to 525 g/l of a plasticizer selected from the group consisting of rosin, the methyl ester of rosin, the glycol ester of rosin, the triethylene glycol ester of rosin and the hydrogenated ester of rosin;
(c) 40 g/l to 200 g/l of at least one surfactant selected from the group consisting of ethoxylated castor oil and alkoxylated butyl alcohol ester; and
(d) water to make up to one liter, but not less than 200 g/l.

20. A formulation in accordance with Claim 19, wherein the pesticide is selected from the group consisting of acetanilides, benzoates, chlorinated hydrocarbons, hydroxybenzonitriles, imidazoles, nitroanilines, nitroxylenes, organophosphorous derivatives, phenoxy-phenoxy-alkane carboxylic acids, pyrethroids and triazoles.

21. A formulation in accordance with Claims 19 or 20, wherein the pesticide is selected from the group consisting of acetanilides, chlorinated hydrocarbons, hydroxybenzonitriles, imidazoles, organophosphorous derivatives, pyrethroids and triazoles.

22. A formulation in accordance with any of Claims 19 to 21, wherein the pesticide is alachlor.

23. A formulation in accordance with any of Claims 19 to 21, wherein the pesticide is endosulfan.

24. A formulation in accordance with any of Claims 19 to 21, wherein the pesticide is chosen from the group consisting of bromoxynil and ioxynil.

25. A formulation in accordance with any of Claims 19 to 21, wherein the pesticide is prochloraz.

26. A formulation in accordance with any of Claims 19 to 21 wherein the pesticide is imazalil.

27. A formulation in accordance with any of Claims 19 to 21, wherein the pesticide is chloropyrifos.

28. A formulation in accordance with any of Claims 19 to 21, wherein the pesticide is cypermethrin.

29. A formulation in accordance with any of Claims 19 to 21, wherein the pesticide is propiconazole.

30. A formulation in accordance with any of Claims 17 to 29, wherein the rosin derivatives are selected from the group consisting of methyl ester of rosin or the triethylene glycol ester of rosin.

31. A formulation in accordance with any of Claims 17 to 29, wherein the surfactant is aldoxylated butyl alcohol.

32. A formulation substantially as hereinbefore described and with reference to the examples.
